# EUROPÄISCHE PATENTSCHRIFT

(11) **EP 2 089 551 B1**
(45) Veröffentlichungstag und Bekanntmachung des Hinweises auf die Patenterteilung: **13.04.2016**
(21) Anmeldenummer: 07801220.0
(22) Anmeldetag: 07.08.2007
(51) Int. Cl.: C21D 7/12, B23P 9/00, B21D 26/02, C21D 9/08

(54) **AUTOFRETTAGEVERFAHREN**
AUTOHOOPING PROCESS
PROCÉDÉ D'AUTOFRETTAGE

(30) Priorität: 16.11.2006 DE 102006054440
(43) Veröffentlichungstag der Anmeldung: 19.08.2009
(73) Patentinhaber: Maximator Gmbh, 37449 Zorge (DE)
(72) Erfinder: KAMPMANN, Bernd, 42555 Velbert (DE); DIEMER, Jochen, 99734 Nordhausen (DE)
(74) Vertreter: Griepenstroh, Jörg
(86) Internationale Anmeldenummer: PCT/DE2007/001409
(87) Internationale Veröffentlichungsnummer: WO 2008/058494

(56) Entgegenhaltungen:
- DE-A1- 3 716 176
- DE-A1- 4 115 284
- JP-A- 57 168 864

## Beschreibung

Die Erfindung betrifft ein Verfahren zur Autofrettage von dickwandigen Werkstücken gemäß den Merkmalen im Oberbegriff des Patentanspruchs 1.

Autofrettage bezeichnet ein Verfahren zur Erhöhung der statischen und dynamischen Belastbarkeit innendruckbeanspruchter, dickwandiger Bauteile. Bei diesem Verfahren werden durch das einmalige Aufbringen eines weit über dem Betriebsdruck liegenden Reckdruckes gezielt Druckeigenspannungen aufgebaut, wobei die Streckgrenze des Werkstoffs teilweise überschritten wird. Teilbereiche des Werkstoffs werden unter hohem Druck plastisch dauerhaft verformt, wohingegen die äußeren Werkstückbereiche nur elastisch verformt werden. Dadurch erfolgt eine Vorspannung des Werkstückinneren und ermöglicht nicht nur eine Verbesserung der Betriebsfestigkeit, sondern bevorzugt eine lebensdauerfeste Gestaltung hochbelasteter Bauteile, wie sie insbesondere bei der Dieseleinspritzung zum Einsatz kommen. Die sogenannten Common Rails, das heißt Kraftstoffverteilerleisten neuester Generation werden mit Drücken in einer Größenordnung von 200 MPa und mehr während des laufenden Betriebs beansprucht. Das gilt auch für die Kraftstoff führenden Leitungen im Umfeld des Common Rails sowie für die daran angeschlossenen Injektoren. Üblicherweise wird bei der Autofrettage ein Hochdruckfluid in das zu bearbeitende Werkstück eingeleitet und unter hohen Druck gesetzt, indem ein außerhalb des Werkstücks angeordneter Druckerzeuger das Hochdruckfluid, das über eine Verbindungsleitung mit dem Inneren des Werkstücks in Verbindung steht, komprimiert. Hierbei kommen üblicherweise Druckübersetzer mit einem großen Übersetzungsverhältnis zum Einsatz. Beispielsweise kann das Übersetzungsverhältnis, das auch dem Durchmesserverhältnis der Kolben des Druckübersetzers gleichgesetzt werden kann, größer als 1:30 sein. Da auf der Hochdruckseite ein Druck von mehreren hundert MPa anliegt, müssen dort besondere Anstrengungen vorgenommen werden, um die Dichtigkeit aller Komponenten der Anordnung, insbesondere des Hochdruckkolbens, sicherzustellen. Dies gelingt dadurch, dass der Hochdruckkolben in einem Hochdruckzylinder geführt wird, der z.B. aus einem Hartmetall gefertigt ist. Durch ihre hohe Härte sind Hartmetalle spröde und empfindlich gegen Schläge und Stoßbeanspruchungen. Die aus einem Hartmetall gefertigten Hochdruckzylinder werden daher von weiteren dickwandigeren Stahlzylindern umgeben, die zudem vorgespannt sind, um die hohen Kräfte im Hochdruckbereich aufnehmen zu können. Diese Bauweise treibt die Kosten für den Hochdruckzylinder in die Höhe, insbesondere da es sich bei einem Hartmetallzylinder um ein schwer zu bearbeitendes und zudem relativ großvolumiges Hartmetallbauteil handelt. Auch die Ankopplung des Hartmetallzylinders an das zu autofrettierende Bauteil ist nicht unproblematisch, da auch die Leitungswege vom Hochdruckzylinder in den Innenraum des Werkstücks den hohen Drücken standhalten müssen. Entsprechende Dichtungen sind vorzusehen, so dass die gesamte Konstruktion sehr aufwendig ist. Grundsätzlich unterliegen alle hochdruckbelasteten Bauteile einschließlich des Hochdruckzylinders einem Verschleiß und müssen früher oder später ausgetauscht werden.

Aus der DE 37 16 176 A1 ist eine Vorrichtung zum Umformen von Hohlkörpern, wie metallischen Dosen, bekannt, wobei der Hohlkörper unter Innendruck eines flüssigen oder viskosen Druckmediums in die Form expandiert wird. Ein in dem Formhohlraum verlagerbarer Verdrängerkörper verdrängt das Druckmedium teilweise und führt zur Druckerhöhung und Umformung des Hohlkörpers.

Aus der DE 41 15 284 A1 ist eine Autofrettagevorrichtung für Rohre mit zwei Gegenhaltern zur Aufnahme eines Rohrs bekannt. Es ist bei dieser Vorrichtung ein in das Rohr einführbarer Dorn vorgesehen, der Dichtungsanordnungen trägt, zum Abdichten eines zwischen dem Dorn und der Rohrinnenwand gebildeten, mit Druckmittel beaufschlagbaren Ringraums. Die Druckmittelzufuhr erfolgt durch einen den Dorn aufnehmenden Dornhalter. Der Dorn ist dafür vorgesehen, die zur Autofrettage erforderliche Druckmittelmenge um einen bestimmten, dem Dornvolumen entsprechenden statischen Volumenanteil zu reduzieren.

Hiervon ausgehend liegt der Erfindung die Aufgabe zugrunde, ein Autofrettageverfahren aufzuzeigen, bei welchem die verschleißbedingten Kosten reduziert sind.

Zur Lösung dieser Aufgabe wird ein Autofrettageverfahren mit den Merkmalen des Patentanspruchs 1 vorgeschlagen.

Vorteilhafte Weiterbildungen des Erfindungsgedankens sind Gegenstand der abhängigen Patentansprüche.

Der der Erfindung zugrunde liegende Gedanke ist, dass möglichst keine Rohrleitungen und damit möglichst wenig verschleißanfällige Bauteile zwischen dem Hochdruckbereich und dem zu befüllenden Werkstück vorhanden sein sollen, um bei einer entsprechenden Vorrichtung so wenig verschleißanfällige Bauteile wie möglich zu haben. Die Lösung wird darin gesehen, das Hochdruckfluid nicht außerhalb des zu autofrettierenden Werkstücks vorzuspannen, sondern innerhalb des zu autofrettierenden Werkstücks. Dies gelingt dadurch, dass das dem Hochdruckfluid im Innenraum zur Verfügung stehende Volumen durch wenigstens einen Verdrängerkörper reduziert wird, der durch eine Verdrängerkolbenöffnung in den Innenraum des Werkstücks verlagert wird. Bei diesem Verfahren wird zunächst der Innenraum des Bauteils mit dem Hochdruckfluid befüllt und verschlossen. Der druckbeaufschlagte Bereich beschränkt sich also nahezu ausschließlich auf den Innenraum des Werkstücks, der im Laufe des Verfahrens kontinuierlich reduziert wird, um den zur Autofrettage notwendigen hohen Druck aufzubauen. Wichtig dabei ist, dass das Werkstück in Relation zu dem Verdrängerkolben nicht als Zylinder zu betrachten ist, in welchem der Verdrängerkolben geführt wird, sondern einen Innendurchmesser aufweist, der grösser ist als der Außendurchmesser des Verdrängerkolbens. Nur auf diese Weise kann sichergestellt werden, dass die gesamte Innenfläche des Werkstücks autofrettiert wird.

In vorteilhafter Ausgestaltung wird das Werkstück über eine Vorfüllöffnung mit dem Hochdruckfluid befüllt. Das Werkstück weist daher eine weitere Öffnung auf, die der Verdrängerkolbenöffnung des Werkstücks vorzugsweise gegenüber liegt. Die Befüllung über eine separate Öffnung ermöglicht es, das Hochdruckfluid über einen Befüllanschluss mit relativ großem Querschnitt in den Innenraum einzubringen, das heißt den Innenraum rasch zu befüllen. Dadurch kann die Taktzeit dieses diskontinuierlichen Fertigungsverfahrens weiter reduziert werden.

Ein weiteres wichtiges Verfahrensmerkmal ist, dass die Verdrängerkolbenöffnung des Werkstücks von einem Dichtkegel abgedichtet wird, der gegen den Rand der Verdrängerkolbenöffnung gepresst wird. Der Dichtkegel kann Bestandteil eines Hochdruckzylinders sein, in welchem der Verdrängerkolben geführt wird. Dadurch entfallen separate Adapterplatten, wie sie bislang zwischen dem Druckerzeuger und dem zu autofrettierenden Werkstück erforderlich waren. Grundsätzlich kann der Dichtkegel aber auch als separates Bauteil ausgebildet sein, um einzeln ausgetauscht werden zu können. Die Abdichtung erfolgt form- und kraftschlüssig über einen unmittelbaren metallischen Kontakt zwischen dem Werkstück und dem Dichtsitz. Das setzt selbstverständlich voraus, dass der Dichtsitz auf die Geometrie des Werkstückes abgestimmt ist. Der Dichtsitz kann daher die Form einer Kegelspitze oder auch einer Kugel haben. Entscheidend für die Wahl der Geometrie des Dichtsitzes ist die angestrebte Dichtigkeit.

Die Dichtigkeit kann bei dem erfindungsgemäßen Verfahren insbesondere dadurch gewährleistet werden, dass die Kraft, über welche die sich gegenüber liegenden Öffnungen verschlossen werden, proportional zum Autofrettagedruck erhöht wird. Falls sich die Verdrängerkolbenöffnung und der separate Vorfüllanschluss nicht gegenüber liegen, sind selbstverständlich entsprechende Abstützeinrichtungen für das Werkstück vorzusehen, um eine Abdichtung des Innenraums zur Autofrettage zu ermöglichen.

Ebenso wie die Verdrängerkolbenöffnung von einem Dichtkegel abgedichtet wird, ist vorgesehen, dass auch die Vorfüllöffnung verschlossen wird, und zwar von einem Verschlusskolben, welcher vorzugsweise ebenfalls eine kegelige oder gerundete Spitze aufweist. Der Verschlusskolben selbst greift daher nur geringfügig in den Innenraum des Werkstücks ein. Der Verschlusskolben selbst muss den Innenraum erst dann abdichten, wenn die gewünschte Hochdruckfluidmenge im Innenraum vorhanden ist.

Mit dem Befüllen des Innenraums werden Gase möglichst vollständig aus dem Innenraum entfernt. Der Innenraum muss daher beim Befüllen im Bereich der Verdrängerkolbenöffnung offen sein. Besonders günstig ist es daher, wenn die Vorfüllöffnung tiefer als die Verdrängerkolbenöffnung angeordnet ist, so dass das Werkstück gewissermaßen von unten befüllt werden kann. Vor dem Einleiten des Hochdruckfluids wird eine Dichthülse gegen eine Anschlussfläche des Werkstücks gedrückt. Diese Dichthülse umgibt den Verschlusskolben und ist gegenüber der Anschlussfläche des Werkstücks über einen endseitigen Dichtring und gegenüber dem Außenumfang des Verschlusskolbens über einen weiteren Dichtring abgedichtet.

Bei dem erfindungsgemäßen Verfahren wird daher zunächst das Werkstück von Hand oder mit Hilfe eines Roboters in eine Klemm- und Positioniereinrichtung gelegt. Anschließend muss die Dichthülse von unten gegen das Werkstück gedrückt werden. Das kann durch Verlagerung des Verschlusskolbens in Richtung auf den Vorfüllanschluss erfolgen, wobei die Dichthülse mitgeschleppt wird. Die Dichthülse ist dabei unter Eingliederung einer Feder an dem Verschlusskolben abgestützt. Die Feder wird so weit gestaucht bis eine ausreichende Vorspannung besteht, um beim Befüllen des Werkstücks eine sichere Abdichtung zu gewährleisten. Die Verdrängerkolbenöffnung im Werkstück bleibt während dieses Vorgangs geöffnet. Nachdem das Werkstück an seinem Vorfüllanschluss umfangsseitig abgedichtet ist, kann über einen Befüllanschluss in der Dichthülse das Hochdruckfluid in das Werkstück eingeleitet werden. Luft entweicht im Bereich der Verdrängerkolbenöffnung, bis das Hochdruckfluid oben aus der Verdrängerkolbenöffnung des Werkstücks ausströmt.

Damit das Hochdruckfluid beim Befüllen des Innenraums nicht unkontrolliert aus der Verdrängerkolbenöffnung ausströmt, kann auch im Bereich dieser Öffnung eine Dichthülse vorgesehen sein, wie sie am Vorfüllanschluss zum Einsatz kommt. Überschüssiges Hochdruckfluid strömt in diese kopfseitige Dichthülse ein und wird dort kontrolliert abgeleitet.

Nach Abschluss des Befüllvorgangs kann der Verschlusskolben mit seiner konischen Dichtspitze in den Vorfüllanschluss eingesetzt werden und diesen hochdruckfest abdichten. Gleichzeitig wird das Werkstück weiter nach oben bewegt und auf den konischen Dichtkegel des Hochdruckzylinders gepresst. Nunmehr ist der Innenraum des Bauteils abgedichtet und ist bereit zur Innendruckbeaufschlagung.

Der Verdrängerkolben wird nun mittels eines weiteren Hydraulikzylinders in den Innenraum des Werkstücks verlagert, so dass das dem Hochdruckfluid zur Verfügung stehende Volumen reduziert wird, mit der Folge, dass der Fluiddruck auf mehrere hundert MPa ansteigt. Jetzt erfolgt die eigentliche Autofrettage.

Nachdem der Autofrettagedruck im Werkstück erreicht wurde, erfolgt die Druckentlastung. Dazu wird der Verdrängerkolben mittels des Hydraulikzylinders, der mit dem Verdrängerkolben fest verbunden ist, aus dem Werkstück herausgefahren, bis der Druck annähernd dem Umgebungsluftdruck entspricht. Dann wird der Verschlusskolben wieder zurückgefahren, so dass beide Öffnungen des Innenraums wieder offen sind. Beim Zurückfahren des Verschlusskolbens wird auch die Dichthülse mit in die Ausgangsposition geschleppt, was auf die Dichtungsreibung zurückzuführen ist.

Am Ende des Fertigungszyklus befinden sich der Verdrängerkolben und der Verschlusskolben einschließlich der Dichthülse wieder in der Ausgangsstellung. Das bearbeitete Werkstück kann entnommen werden. Der Prozess beginnt von vorne.

Bei dem erfindungsgemäßen Verfahren wird angestrebt, die Menge des Hochdruckfluidvolumens so gering wie möglich zu halten. Dadurch lässt sich das Verfahren schneller durchführen. Zudem können die früher oder später auszutauschenden Verschleißteile einer solchen Autofrettagevorrichtung deutlich kleiner dimensioniert werden als bei herkömmlichen Aurofrettagevorrichtungen, bei welchen der gewünschte Druck außerhalb des Werkstücks aufgebaut wird. Der Verdrängerkolben muss selbstverständlich nicht die gesamte Länge des Werkstücks durchsetzen, sondern ist so dimensioniert, dass bei möglichst geringem Hochdruckfluideinsatz aber gleichzeitig auch bei möglichst geringem Hub das gewünschte Verfahrensergebnis erreicht wird. Im Rahmen der Erfindung ist es daher auch denkbar, die Menge des eingesetzten Hochdruckfluidvolumens dadurch zu reduzieren, dass in den Innenraum Verdrängerkörper konstanten Volumens in Form von metallischen Einsätzen eingebracht sind. Derartige Einsätze können auch von flexibler Gestalt sein, wie es beispielsweise bei gebogenen Kralistoffleitungen zweckmäßig ist. Das erfindungsgemäße Verfahren kann insbesondere zur Autofrettage von Kraftstoff führenden Bauteilen zum Einsatz kommen. Konkret eignet es sich sehr gut zur Autofrettage von Common Rails, da es sich hierbei um dickwandige, gerade Werkstücke handelt, die besonders hohen Drücken standhalten müssen. Selbstverständlich eignet sich das Verfahren auch zur Autofrettage von Kraftstoffinjektoren sowie zur Autofrettage von Kraftstoff führenden Leitungen und zur Autofrettage von druckbelasteten Bauteilen im Einspritzbereich.

Die Erfindung wird nachfolgend anhand eines in den Zeichnungen dargestellten Ausführungsbeispiels näher erläutert. Es zeigen:
- Figur 1: eine Autofrettagevorrichtung in einer schematischen Darstellung im Längsschnitt in einer Ausgangsposition;
- Figur 2: die Autofrettagevorrichtung der Figur 1 nach Abschluss des Befüllvorgangs und
- Figur 3: die Autofrettagevorrichtung während der Hochdruckbeaufschlagung des Werkstücks.

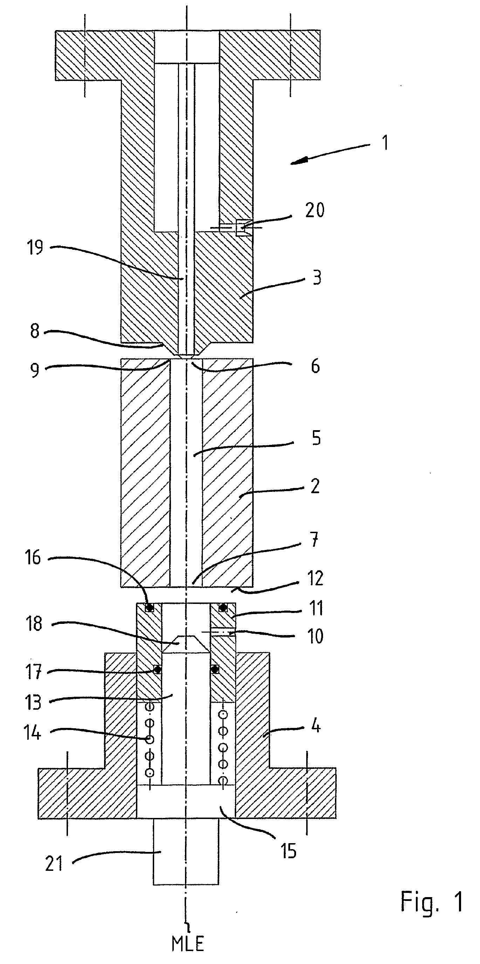

Figur 1 zeigt eine Autofrettagevorrichtung 1 zur Autofrettage eines dickwandigen Werkstücks 2, wie beispielsweise eines Common Rails. Hierzu wird das Werkstück 2 zwischen einem Hochdruckzylinder 3 und einem Verschlusszylinder 4 positioniert. Die Mittellängsachse MLE des Hochdruckzylinders 3, des Werkstücks 2 und des Verschlusszylinders 4 fluchtet hierbei.

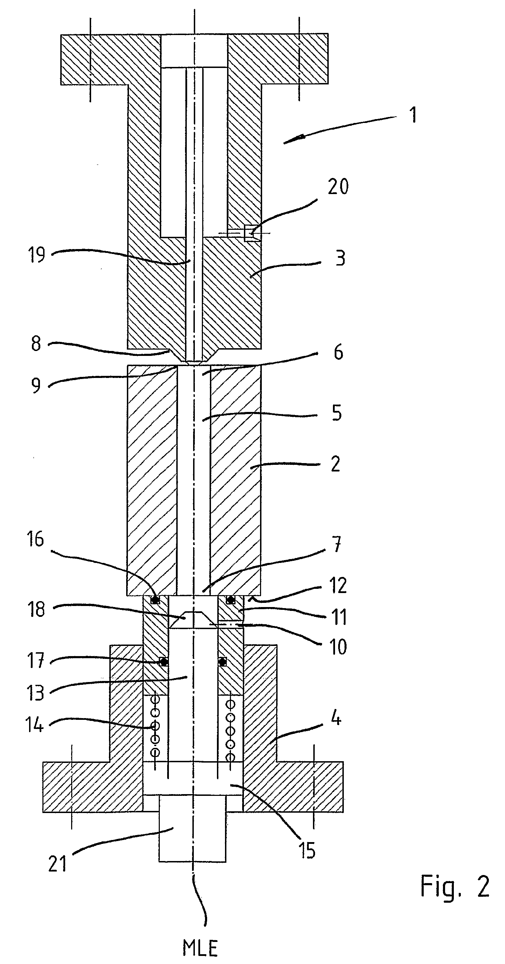

Es ist zu erkennen, dass das Werkstück 2 einen Innenraum 5 in Form einer Bohrung aufweist, wobei die in der Bildebene obere Mündung als Verdrängerkolbenöffnung 6 und die in der Bildebene untere Öffnung als Vorfüllöffnung 7 bezeichnet wird. Wie auf den nachfolgenden Figuren zu erkennen ist, erfolgt eine Abdichtung der Verdrängerkolbenöffnung 6 und der Vorfüllöffnung 7 über entsprechende Dichtkegel. Ein erster Dichtkegel 8 ist Bestandteil des Hochdruckzylinders 3 und wird zum Schließen der Verdrängerkolbenöffnung 6 gegen diese gepresst. Bevor jedoch die Verdrängerkolbenöffnung 6 geschlossen wird, muss zunächst ein nicht näher dargestelltes Hochdruckfluid in den Innenraum 5 eingebracht werden. Dies erfolgt über einen Befüllanschluss 10, der radial in einer Dichthülse 11 angeordnet ist. Bevor jedoch Hochdruckfluid über den Befüllanschluss 10 in den Innenraum 5 eingeleitet wird, muss die Dichthülse 11 wie in Figur 2 dargestellt gegen eine Anschlussfläche 12 des Werkstücks 2 verlagert werden. Dies erfolgt mit Hilfe eines Verschlusskolbens 13, der innerhalb der Dichthülse 11 angeordnet ist. Die Dichthülse 11 ist über eine Feder 14 an einem Kragen 15 des Verschlusskolbens 13 abgestützt, so dass die Dichthülse 11 unter Eingliederung eines stirnseitigen Dichtrings 16 gegen die Anschlussfläche 12 des Werkstücks 2 gepresst wird und hier eine Abdichtung herbeiführt. Es wird nun so viel Hochdruckfluid in den Innenraum 5 eingeleitet, bis es an der Verdrängerkolbenöffnung 6 austritt. Anschließend wird der Verschlusskolben 13, der über einen in der Dichthülse 11 aufgenommenen Dichtring 17 abgedichtet ist, gegen den Vorfüllanschluss 7 gepresst und schließt diesen durch seine kegelförmige Dichtspitze 18 ab. Gleichzeitig erfolgt eine Abdichtung des oberen Endes des Innenraums 5, indem der Dichtkegel 8 des Hochdruckzylinders 3 gegen den Rand 9 des Werkstücks 2 gepresst wird. Nun erfolgt eine Druckbeaufschlagung des Hochdruckfluids, indem das dem Hochdruckfluid im Innenraum 5 zur Verfügung stehende Volumen durch einen Verdrängerkolben 19 reduziert wird.

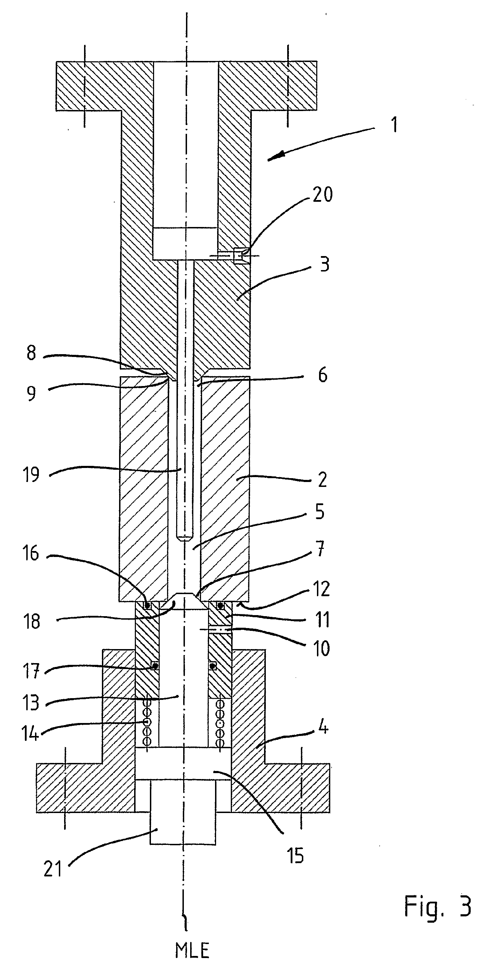

Figur 3 zeigt, wie der dornförmige Verdrängerkolben 19 durch den Dichtkegel 8 hindurch in den Innenraum 5 verlagert wird. Das Hochdruckfluid im Innenraum 5 wird hierbei so stark verdichtet, dass im Innenraum 5 Drücke von mehreren hundert MPa aufgebaut werden können, die zur Autofrettage des Werkstücks 2 führen. Der Verdrängerkolben 19 ist mit einem nicht näher dargestellten Hydraulikzylinder gekoppelt, der mit einem niedrigeren Druck auf einer im Verhältnis zur Querschnittsfläche des Verdrängerkolbens 19 grösseren Kolbenfläche den notwendigen Autofrettagedruck aufbaut. Ein Leckageanschluss 20 ermöglicht den Austritt von Leckströmungen.

Ebenso wie der Verdrängerkolben 19 hydraulisch verlagert wird, greift auch an den Verschlusskolben 13 ein schematisch angedeuteter Hydraulikzylinder 21 an, der mit dem Verschlusskolben 13 fest verbunden ist.

### Bezugszeichen:

- 1 -: Autofrettageanordnung
- 2 -: Werkstück
- 3 -: Hochdruckzylinder
- 4 -: Verschlusszylinder
- 5 -: Innenraum v. 2
- 6 -: Verdrängerkolbenöffnung
- 7 -: Vorfüllöffnung
- 8 -: Dichtkegel
- 9 -: Rand
- 10 -: Befüllanschluss
- 11 -: Dichthülse
- 12 -: Anschlussfläche
- 13 -: Verschlusskolben
- 14 -: Feder
- 15 -: Kragen
- 16 -: Dichtring
- 17 -: Dichtring
- 18 -: Dichtspitze
- 19 -: Verdrängerkolben
- 20 -: Leckageanschluss
- 21 -: Hydraulikzylinder

- MLE -: Mittellängsachse

## Patentansprüche

1. Autofrettageverfahren, bei welchem ein zu autofrettierendes, dickwandiges Werkstück (2) in einer Autofrettagevorrichtung (1) positioniert wird, wobei der Innenraum (5) des Werkstücks (2) mit einem Fluid befüllt und druckfest verschlossen wird, **dadurch gekennzeichnet, dass** das dem Fluid im Innenraum (5) zur Verfügung stehende Volumen durch wenigstens einen Verdrängerkolben (19) reduziert wird, der durch eine Verdrängerkolbenöffnung (6) des Werkstücks (2) in den Innenraum (5) des Werkstücks (2) verlagert wird, wobei der Innendurchmesser des Werkstückes größer ist als der Außendurchmesser des Verdrängerkolbens.

2. Autofrettageverfahren nach Anspruch 1, **dadurch gekennzeichnet, dass** das Werkstück (2) über eine Vorfüllöffnung (7) mit dem Fluid befüllt wird.

3. Autofrettageverfahren nach Anspruch 1 oder 2, **dadurch gekennzeichnet, dass** die Verdrängerkolbenöffnung (6) von einem Dichtkegel (8) abgedichtet wird, der gegen den Rand (9) der Verdrängerkolbenöffnung (6) gepresst wird.

4. Autofrettageverfahren nach einem der Ansprüche 1 bis 3, **dadurch gekennzeichnet, dass** die Vorfüllöffnung (7) von einem Verschlusskolben (13) verschlossen wird.

5. Autofrettageverfahren nach einem der Ansprüche 1 bis 4, **dadurch gekennzeichnet, dass** zum Vorfüllen eine den Verschlusskolben (13) umgebende Dichthülse (11) gegen eine Anschlussfläche (12) des Werkstücks (2) gedrückt wird.

6. Autofrettageverfahren nach Anspruch 5, **dadurch gekennzeichnet, dass** der Verschlusskolben (13) die Dichthülse (11) unter Eingliederung einer Feder (14) gegen die Anschlussfläche (12) drückt.

7. Autofrettageverfahren nach Anspruch 6, **dadurch gekennzeichnet, dass** der Verschlusskolben (13) über einen Dichtring (17) umfangsseitig gegenüber der Dichthülse (11) abgedichtet ist, wobei die Dichthülse (1¹) über die Dichtringreibung von dem Verschlusskolben (13) mitgeschleppt wird.

8. Autofrettageverfahren nach einem der Ansprüche 1 bis 7, **dadurch gekennzeichnet, dass** das Werkstück (2) von unten befüllt wird.

9. Autofrettageverfahren nach einem der Ansprüche 1 bis 8, **dadurch gekennzeichnet, dass** sich die Verdrängerkolbenöffnung (6) und die Vorfüllöffnung (7) gegenüber liegen, wobei die Kraft, über welche die gegenüberliegenden Öffnungen verschlossen werden, proportional zum Autofrettagedruck erhöht wird.

10. Autofrettageverfahren nach einem der Ansprüche 1 bis 9, **dadurch gekennzeichnet, dass** der Verdrängerkolben (19) nach Erreichen des Autofrettagedrucks wieder aus dem Werkstück (2) herausgefahren wird, bis der Druck annähernd dem Umgebungsdruck entspricht, woraufhin der Dichtkegel (8) von der Verdrängerkolbenöffnung (6), der Verschlusskolben (13) von der Vorfüllöffnung (7) und die Dichthülse (11) von der Anschlussfläche (12) abgehoben und das autofrettierte Werkstück (2) aus der Vorrichtung (1) entnommen wird.

11. Autofrettageverfahren nach einem der Patenansprüche 1 bis 10, **dadurch gekennzeichnet, dass** das Werkstück (2) ein Kraftstoff führendes Bauteil ist.

## Claims

1. Autofrettage process, in which a thick-walled workpiece (2) which is to be subjected to autofrettage is positioned in an autofrettage apparatus (1), the inner cavity (5) of the workpiece (2) being filled with a fluid and sealed off in pressuretight manner, **characterised in that** the space available for the fluid in the inner cavity (5) is reduced by at least one displacement ram (19) which is moved through a displacement ram opening (6) of the workpiece (2) into the inner cavity (5) of the workpiece (2), the internal diameter of the workpiece being greater than the external diameter of the displacement ram.

2. Autofrettage process according to claim 1, **characterised in that** the workpiece (2) is filled with the fluid through a pre-filling opening (7).

3. Autofrettage process according to claim 1 or 2, **characterised in that** the displacement ram opening (6) is sealed off by a sealing cone (8) which is pressed against the rim (9) of the displacement ram opening (6).

4. Autofrettage process according to one of claims 1 to 3, **characterised in that** the pre-filling opening (7) is closed off by a closure ram (13).

5. Autofrettage process according to one of claims 1 to 4, **characterised in that**, for the pre-filling, a sealing sleeve (11) surrounding the closure ram (13) is pressed against a contact surface (12) of the workpiece (2).

6. Autofrettage process according to claim 5, **characterised in that** the closure ram (13) presses the sealing sleeve (11) against the contact surface (12) with the aid of a spring (14).

7. Autofrettage process according to claim 6, **characterised in that** the closure ram (13) is circumferentially sealed off from the sealing sleeve (11) by means of a sealing ring (17), the sealing sleeve (11) being carried along by the closure ram (13) by means of the friction of the sealing ring.

8. Autofrettage process according to one of claims 1 to 7, **characterised in that** the workpiece (2) is filled from below.

9. Autofrettage process according to one of claims 1 to 8, **characterised in that** the displacement ram opening (6) and the pre-filling opening (7) are opposite one another, while the force by means of which the opposing openings are closed off is increased proportionally to the autofrettage pressure.

10. Autofrettage process according to one of claims 1 to 9, **characterised in that**, after the autofrettage pressure has been reached, the displacement ram (19) is drawn out of the workpiece (2) again until the pressure corresponds approximately to the ambient pressure, whereupon the sealing cone (8) is lifted away from the displacement ram opening (6), the displacement ram (13) is lifted away from the pre-filling opening (7) and the sealing sleeve (11) is lifted away from the contact surface (12) and the autofrettagedworkpiece (2) is removed from the apparatus (1).

11. Autofrettage process according to one of claims 1 to 10, **characterised in that** the workpiece (2) is a fuel-carrying component.

## Revendications

1. Procédé d'autofrettage, selon lequel on positionne une pièce (2) à autofretter ayant une paroi épaisse dans un dispositif d'autofrettage (1), l'espace intérieur (5) de la pièce (2) étant rempli avec un fluide et fermé de manière à résister à la pression, **caractérisé en ce que** le volume disponible pour le fluide dans l'espace intérieur (5) est réduit par au moins un piston compresseur (19) qui est déplacé à travers une ouverture de piston compresseur (6) de la pièce (2) jusque dans l'espace intérieur (5) de la pièce (2), le diamètre intérieur de la pièce étant plus grand que le diamètre extérieur du piston compresseur.

2. Procédé d'autofrettage selon la revendication 1, **caractérisé en ce que** la pièce (2) est remplie de fluide par l'intermédiaire d'une ouverture de remplissage (7).

3. Procédé d'autofrettage selon la revendication 1 ou 2, **caractérisé en ce que** l'ouverture de piston compresseur (6) est rendue étanche par un cône d'étanchéité (8) qui est poussé contre le bord (9) de l'ouverture de piston compresseur (6).

4. Procédé d'autofrettage selon l'une des revendications 1 à 3, **caractérisé en ce que** l'ouverture de remplissage (7) est fermée par un piston de fermeture (13).

5. Procédé d'autofrettage selon l'une des revendications 1 à 4, **caractérisé en ce que**, pour le remplissage, un manchon d'étanchéité (11) entourant le piston de fermeture (13) est poussé contre une surface de raccordement (12) de la pièce (2).

6. Procédé d'autofrettage selon la revendication 5, **caractérisé en ce que** le piston de fermeture (13) pousse le manchon d'étanchéité (11) contre la surface de raccordement (12) en incluant un ressort (14).

7. Procédé d'autofrettage selon la revendication 6, **caractérisé en ce que** le piston de fermeture (13) est étanchéifié au niveau de sa périphérie par rapport au manchon d'étanchéité (11) par l'intermédiaire d'une bague d'étanchéité (17), le manchon d'étanchéité (11) étant entraîné par le piston de fermeture (13) par l'intermédiaire du frottement de la bague d'étanchéité.

8. Procédé d'autofrettage selon l'une des revendications 1 à 7, **caractérisé en ce que** la pièce (2) est remplie par le bas.

9. Procédé d'autofrettage selon l'une des revendications 1 à 8, **caractérisé en ce que** l'ouverture de piston compresseur (6) et l'ouverture de remplissage (7) sont à l'opposé l'une de l'autre, la force par l'intermédiaire de laquelle sont fermées les ouvertures opposées étant augmentée proportionnellement à la pression d'autofrettage.

10. Procédé d'autofrettage selon l'une des revendications 1 à 9, **caractérisé en ce que**, après avoir atteint la pression d'autofrettage, le piston compresseur (19) est ramené hors de la pièce (2) jusqu'à ce que la pression corresponde approximativement à la pression ambiante, à la suite de quoi le cône d'étanchéité (8) est soulevé de l'ouverture de piston compresseur (6), le piston de fermeture (13) est soulevé de l'ouverture de remplissage (7), le manchon d'étanchéité (11) est soulevé de la surface de raccordement (12) et la pièce autofrettée (2) est extraite du dispositif (1).

11. Procédé d'autofrettage selon l'une des revendications 1 à 10, **caractérisé en ce que** la pièce (2) est une pièce menant du carburant.
